# EUROPÄISCHE PATENTSCHRIFT

(11) **EP 2 808 284 B1**
(45) Veröffentlichungstag und Bekanntmachung des Hinweises auf die Patenterteilung: **28.12.2016**
(21) Anmeldenummer: 14001487.9
(22) Anmeldetag: 25.04.2014
(51) Int. Cl.: B65H 54/52, F16F 7/09

(54) **Reibungsdämpfer für einen schwenkbar gelagerten Spulenrahmen einer Spulvorrichtung einer Kreuzspulen herstellenden Textilmaschine**
Frictional damping device for a pivoting mounted winding frame of a winding device of a textile machine which produces cross-wound spools
Amortisseur à friction pour un support de bobine pivotant d'un dispositif de bobinage d'une machine textile fabriquant des bobines croisées

(30) Priorität: 01.06.2013 DE 102013009246
(43) Veröffentlichungstag der Anmeldung: 03.12.2014
(73) Patentinhaber: Saurer Germany GmbH & Co. KG, 42897 Remscheid (DE)
(72) Erfinder: Göbbels, Heinz Dieter, 41179 Mönchengladbach (DE); Peuker, Heinz-Josef, 41844 Wegberg (DE)

(56) Entgegenhaltungen:
- DE-A1- 2 160 573
- DE-A1- 2 543 281
- DE-A1-102010 031 717

## Beschreibung

Bei Kreuzspulen herstellenden Textilmaschinen, beispielsweise Offenend-Rotorspinnmaschinen oder Kreuzspulautomaten besteht während des Spulbetriebes stets die Gefahr, dass es an den Arbeitsstellen beim Spulen der Kreuzspulen zu starken Schwingungen der Spulenrahmen kommt.
Insbesondere zu Beginn einer Spulenreise sowie bei der Herstellung relativ harter Kreuzspulen besteht oft die Gefahr, dass die Amplitude der Rahmenschwingung so groß wird, dass der Spulprozess entscheidend beeinträchtigt wird, das heißt, dass Kreuzspulen gefertigt werden, die später kaum noch abspulbar und damit unbrauchbar sind.
Aus diesem Grunde verfügen die schwenkbar gelagerten Spulenrahmen der Spulvorrichtungen der bekannten Spul- oder Spinnmaschinen in der Regel jeweils über einen schwenkbar gelagerten Spulenrahmen mit zwei Spulenrahmenarmen zum frei drehbaren Haltern einer Kreuzspule sowie über eine zugehörige Dämpfungseinrichtung. Das heißt, die schwenkbar gelagerten Spulenrahmen sind jeweils mit einer Dämpfungseinrichtung auszustatten, die gewährleisten soll, dass während des gesamten Spulbetriebes eine ausreichende Dämpfung der Spulenrahmenschwingungen gegeben ist.

Derartige Dämpfungseinrichtungen für schwenkbar gelagerte Spulenrahmen sind seit langem bekannt und in der Patentliteratur in verschiedenen Ausführungsformen relativ ausführlich beschrieben.

In der schweizerischen Patentschrift CH 374 003 ist beispielsweise eine Dämpfungseinrichtung beschrieben, die einen bestrombaren Elektromagneten aufweist, der eine Ankerplatte beaufschlagt, die ihrerseits über eine Stange mit dem zu dämpfenden schwenkbar gelagerten Spulenrahmen in Verbindung steht. Das heißt, bei dieser bekannten Dämpfungseinrichtung wird mittels eines Elektromagneten, der bekanntermaßen eine bestrombare Spule beinhaltet, eine Kraftkomponente erzeugt, die die an den Spulenrahmen angeschlossene ferromagnetische Ankerplatte an ein stationäres Widerlager presst. Das Dämpfungsverhalten dieser Dämpfungseinrichtung ergibt sich folglich aus der mechanischen Reibung zwischen Ankerplatte und Widerlager.

Die Dämpfungseinrichtung gemäß CH-PS 374 003 weist allerdings verschiedene Nachteile auf und konnte sich deshalb in der Praxis nie durchsetzen.
Eine vergleichbare Dämpfungseinrichtung ist auch durch die DE 100 12 005 B4 bekannt.

Diese Dämpfungseinrichtung weist ein bewegliches, elektrisch leitfähiges Bauelement auf, das zumindest mittelbar mit dem Spulenrahmen verbunden und derart angeordnet ist, dass das Bauelement berührungslos das Magnetfeld eines stationär angeordneten Magnetsystems schneidet. Die Wirkung der Dämpfungseinrichtung beruht dabei auf der Entstehung von Wirbelströmen in dem elektrisch leitfähigen Bauteil.
In der Praxis hat sich jedoch gezeigt, dass bei einer Dämpfungseinrichtung, die auf dem Wirbelstromprinzip beruht, die durch die Spulenrahmenschwingung in das leitfähige Bauteil induzierte Spannung nicht ausreicht, um eine zufriedenstellende Dämpfung zu erreichen.

Des Weiteren sind zum Beispiel durch die DE 41 21 780 A1 oder die DE 100 46 603 A1 Spulvorrichtungen von Kreuzspulen herstellenden Textilmaschinen bekannt, bei denen die Dämpfungseinrichtungen für den Spulenrahmen als Hydraulikzylinder ausgebildet sind.

Bei der Dämpfungseinrichtung gemäß DE 41 21 780 A1 ist beispielsweise der Kolben des Hydraulikzylinders mit einigen Durchbrechungen ausgestattet, durch die bei Schwingungen des Spulenrahmens ein im Zylinder befindliches Dämpfungsmedium strömen kann, was zu einer Dämpfung der Schwingungen des Spulenrahmens führt.

Auch die Schwingungsdämpfungseinrichtung gemäß DE 100 46 603 A1 arbeitet mit einem Hydraulikzylinder. Das Dämpfungsmedium im Hydraulikzylinder ist allerdings eine rheologisch veränderbare Flüssigkeit, deren Viskosität mittels eines magnetischen Felderzeugers verändert werden kann.

Des Weiteren sind Schwingungsdämpfungseinrichtungen bekannt, die über einen Dämpfungs- und Hebezylinder verfügen. Dieser Dämpfungs- und Hebezylinder weist eine pneumatisch arbeitende Einrichtung zum definierten Abheben einer im Spulenrahmen gehalterten Kreuzspule von ihrer Spulenantriebs- oder Stützwalze sowie eine hydraulisch arbeitende Dämpfungseinrichtung auf, die mit Öl als Dämpfungsmittel arbeitet, dessen Strömungsbeeinflussung zu einer Reduzierung von während des Spulbetriebes auftretenden Spulenrahmenschwingungen führt.
Eine derartig ausgebildete Schwingungsdämpfungseinrichtung ist zum Beispiel im Handbuch "AUTOCONER 238" der Fa. Schlafhorst auf den Seiten 01.3.9 und 01.3.11 beschrieben.

Durch die DE 10 2010 031 717 A1 wird ein hydraulischer Schwingungsdämpfer offenbart, der eine hohe Dichtwirkung aufweisen soll und dessen Kolbenstange mit möglichst geringer Reibung gegenüber dem Zylindergehäuse axial verschiebbar ist.

Um dies zu erreichen, ist zusätzlich vor dem Ölabstreifring des Schwingungsdämpfers in Richtung Dämpfungskolben ein Vorabstreifring angeordnet. Dabei wirkt der Vorabstreifring gegenüber dem nach außen hin nachfolgenden Ölabstreifring mit geringer bis gar keiner Reibung mit der Kolbenstange zusammen. Mit diesem speziellen Vorabstreifring wurde im Prinzip ein weiterer Ölabstreifring geschaffen, der zumindest den überwiegenden Teil des an der Kolbenstange anhaftenden Öls abstreifen soll.

Auch in der DE 195 34 333 A1 ist eine Schwingungsdämpfungseinrichtung beschrieben, die einen als Öldämpfer ausgebildeten, linear arbeitenden, hydraulischen Dämpfungszylinder aufweist, der über einen Hebel an den schwenkbar gelagerten Spulenrahmen angeschlossen ist.

Bei diesen bekannten Dämpfungszylindern verhindert eine Kolbenstangendichtung ein Austreten von Dämpfungsöl im Bereich der Kolbenstange. Außerdem verfügen diese Dämpfungszylinder über einen Dichtungsring, der zwischen dem Zylinderunterteil und dem Zylinderoberteil des Dämpfungszylinders angeordnet ist.

Obwohl die Dichtungselemente dieser bekannten Dämpfungszylinder im Laufe der Zeit ständig verbessert wurden, besteht bei solchen hydraulisch arbeitenden Dämpfungszylindern doch stets die Gefahr, dass es zu einem Austritt von Dämpfungsöl kommt, was nicht nur zu einer Verschmutzung des Umfeldes und einer oft nicht sofort bemerkten Verschlechterung des Dämpfungsvermögens führt, sondern in Textilbetrieben in Verbindung mit Faserstaub auch eine nicht unerhebliche Brandgefahr darstellt.

In der Vergangenheit sind deshalb bereits Versuche unternommen worden, derartige hydraulisch arbeitende Dämpfungseinrichtungen durch Dämpfungseinrichtungen zu ersetzen, die kein Dämpfungsöl benötigen.

In der DE 199 24 390 A1 ist eine Spulvorrichtung einer Arbeitsstelle einer Textilmaschine beschrieben, bei der ein am Maschinenrahmen der Textilmaschine schwenkbar gelagerter Spulenrahmen mit einer Dämpfungseinrichtung ausgestattet ist, die als Reibungsdämpfer ausgebildet ist.
Bei dieser bekannten Einrichtung ist am Spulenrahmen beweglich eine Führungsstange befestigt, die mit einem Kolben einer ebenfalls am Maschinenrahmen der Textilmaschine angeordneten, beweglich gelagerten Zylindereinrichtung korrespondiert. Bremsflächen des Kolbens der Zylindereinrichtung liegen dabei, entweder durch Federkraft oder pneumatisch beaufschlagt, an der Führungsstange an und initiieren dabei ein Reibungsmoment, das zu einer Schwingungsdämpfung des Spulenrahmens während des Spulbetriebes führt.

Auch in der DE 10 2007 041 554 A1 ist eine Spulvorrichtung einer Textilmaschine beschrieben, die mit einem Reibungsdämpfer ausgestattet ist. Der Reibungsdämpfer besteht dabei aus einer am Maschinenrahmen stationär angeordneten Pneumatikeinrichtung mit einem Reibelement, das während des Spulbetriebes eine Reibfläche beaufschlagt, die Bestandteil eines am schwenkbar gelagerten Spulenrahmen angeordneten, den Spulenrahmen nach hinten überragenden Reibungshebels ist.

Nachteilig bei diesen bekannten, mit Reibungsdämpfern arbeitenden Dämpfungseinrichtungen sind insbesondere deren sperrige Ausbildung sowie deren Anordnung im Bereich der Spulvorrichtung. Das heißt, sowohl die in der DE 199 24 390 A1 beschriebene separate Anordnung einer beweglichen Zylindereinrichtung am Maschinenrahmen, die mit einer etwa mittig am Spulenrahmen angelenkten Führungsstange korrespondiert, als auch die in der DE 10 2007 041 554 A1 beschriebene Ausbildung mit einer den Spulenrahmen nach hinten verlängernden Reibungsfläche und einem zugehörigen, am Maschinenrahmen installierten Bremselement führt im Bereich der Spulvorrichtung jeweils zu einem nicht unerheblichen Platzbedarf bzw. zu einer Konzentration von Bauelementen, was insbesondere im Zusammenhang mit dem Einsatz von selbsttätig arbeitenden Serviceaggregaten sehr nachteilig ist.

Ausgehend vom vorgenannten Stand der Technik liegt der Erfindung die Aufgabe zugrunde, einen Reibungsdämpfer für einen schwenkbar gelagerten Spulenrahmen einer Spulvorrichtung einer Kreuzspulen herstellenden Textilmaschine zu entwickeln, der sowohl während des Spulbetriebes eine zuverlässige Dämpfung des Spulenrahmens gewährleistet, als auch im Bedarfsfall jederzeit ein Anheben des Spulenrahmens ermöglicht, wobei zuverlässig sichergestellt sein muss, dass eine Verschmutzung der Arbeitsstelle durch aus dem Reibungsdämpfer austretendes Dämpfungsöl ausgeschlossen ist.
Der erfindungsgemäße Reibungsdämpfer sollte außerdem so ausgebildet sein, dass es bei einem Einsatz von Serviceaggregaten an den Spulvorrichtungen zu keinen Behinderungen der Serviceaggregate aufgrund von Platzmangel im Bereich der Arbeitsstellen kommt.

Diese Aufgabe wird erfindungsgemäß durch einen Reibungsdämpfer gelöst, der die im Kennzeichen des Anspruches 1 beschriebenen Merkmale aufweist.

Vorteilhafte Weiterbildungen der Erfindung sind Gegenstand der Unteransprüche.

Der im Anspruch 1 beschriebene Reibungsdämpfer mit einer Dämpfungseinrichtung, die eine pneumatisch betätigbare Einrichtung aufweist, die an das Druckluftsystem der Kreuzspulen herstellenden Textilmaschine angeschlossen und so ansteuerbar ist, dass eine Kolbenstange des Reibungsdämpfers mit einem Reibungsmoment beaufschlagt wird, hat insbesondere den Vorteil, dass ein solcher Reibungsdämpfer kompakt gestaltet ist und somit Serviceaggregate in keiner Weise behindert. Außerdem ist der erfindungsgemäße Reibungsdämpfer auch relativ problemlos nachträglich an Arbeitsstellen von Textilmaschinen einsetzbar, deren Spulenrahmen bislang mit oft etwas problematischen Öldämpfern ausgestattet sind. Das heißt, um die erfindungsgemäßen Reibungsdämpfer vorteilhaft einsetzen zu können, sind im Bereich der Arbeitsstellen bekannter Textilmaschinen lediglich einige kleine Modifikationen bezüglich der Anschlüsse an das Druckluftsystem der Textilmaschine erforderlich.
Durch den Einsatz der erfindungsgemäßen Reibungsdämpfer, die selbstverständlich auch an neuen Textilmaschinen vorteilhaft einsetzbar sind, wird nicht nur während des Spulbetriebes eine ordnungsgemäße Dämpfung des Spulenrahmens und damit auch der Kreuzspule gewährleistet, sondern auch sichergestellt, dass Verschmutzungen der Arbeitsstellen durch austretendes Dämpfungsöl ausgeschlossen sind.
Die Dämpfungseinrichtung des Reibungsdämpfers verfügt über ein Reibungselement, das verschiebbar gelagert ist und bei entsprechender Druckbeaufschlagung mit der Kolbenstange des Reibungsdämpfers korrespondiert und dabei ein Reibungsmoment auf die Kolbenstange ausübt.
Der Einsatz eines solchen pneumatisch beaufschlagbaren Reibungselements ermöglicht auf einfache Weise das Erzeugen eines zuverlässigen Reibungsmomentes, das dazu benutzt werden kann, über die Kolbenstange des Reibungsdämpfers im Sinne "dämpfen" auf den Spulenrahmen einzuwirken und dadurch Schwingungen des Spulenrahmens zu minimieren.

Das Reibungselement weist des Weiteren zwei Halbschalen auf, die bezüglich der Kolbenstange axial und radial verschiebbar gelagert sind und jeweils einen konischen Querschnitt aufweisen. Die Halbschalen sind außerdem gleitend an einer entsprechend ausgebildeten Führungsfläche einer Abstütz- und Führungseinrichtung des Reibungsdämpfers geführt.
Das bedeutet, bei entsprechender Druckbeaufschlagung eines zugehörigen unteren Pneumatikkolbens werden die beiden Halbschalen axial verschoben und an der Lagerfläche der Lagereinrichtung des Reibungsdämpfers entlang gleitend gleichzeitig etwas in radialer Richtung verlagert. Die Halbschalen werden dabei mit ihren Innenseiten an die Kolbenstange des Reibungsdämpfers angedrückt und verhindern auf diese Weise, dass der angeschlossene, die Kreuzspule halternde Spulenrahmen während des Spulbetriebes zu sehr in Schwingungen geraten kann.

Wie im Anspruch 2 beschrieben, ist in bevorzugter Ausführungsform vorgesehen, dass der Reibungsdämpfer zur Positionierung der Halbschalen über einen als Druckring ausgebildeten unteren Pneumatikkolben verfügt, der bei Druckbeaufschlagung die Halbschalen gegen die Kraft eines Federelements in axialer Richtung verschiebt.
Die Ausbildung des unteren Pneumatikzylinders als Druckring hat dabei nicht nur den Vorteil einer sehr kompakten Konstruktion, die vorteilhaft in das Gehäuse eines zylinderartigen, mit einer Kolbenstange ausgestatteten Reibungsdämpfers integrierbar ist, sondern ermöglicht auf einfache Weise auch die Ausbildung einer relativ großen Druckfläche, was sich bezüglich der Kraft, mit der die Halbschalen bei ihrer Verschiebung beaufschlagt und an die Kolbenstange des Reibungsdämpfers angedrückt werden, sehr positiv auswirkt.

Der als Druckring ausgebildete untere Pneumatikzylinder des Reibungsdämpfers ist vorteilhafterweise, wie im Anspruch 3 dargelegt, an einen Druckraum angeschlossen, der seinerseits über eine Ventileinrichtung mit dem Druckluftsystem der Kreuzspulen herstellenden Textilmaschine in Verbindung steht.
Eine solche Ausbildung ermöglicht auf einfache Weise eine definierte Ansteuerung der kraftschlüssig arbeitenden Dämpfungseinrichtung des Reibungsdämpfers. Das heißt, das an der Textilmaschine ohnehin vorhandene Druckluftsystem kann nach einer geringfügigen Modifikation zur Betätigung der Dämpfungseinrichtung des Reibungsdämpfers herangezogen werden.

Gemäß Anspruch 4 verfügt der Reibungsdämpfer außerdem über eine Einrichtung zum Anheben des Spulenrahmens, die ein axial verschiebbar gelagertes Klemmglied aufweist, das durch einen oberen Pneumatikkolben aktivierbar ist.
Eine solche im Zusammenhang mit Öldämpfern bereits seit langem bewährte Anhebeeinrichtung zeichnet sich durch eine sehr kompakte und wartungsarme Bauweise aus und kann problemlos in einen erfindungsgemäßen Reibungsdämpfer integriert werden.

Wie im Anspruch 5 dargelegt, verfügt das Klemmglied des Reibungsdämpfers in bevorzugter Ausführungsform über Kugelelemente, die, durch den oberen Pneumatikkolben des Reibungsdämpfers an dessen Kolbenstange angedrückt, das Klemmelement an der Kolbenstange fixieren. Der obere Pneumatikkolben verlagert anschließend die fixierte Kolbenstange in axialer Richtung, was zu einem Anheben des Spulenrahmens sowie einem Abheben der Kreuzspule von ihrer zugehörigen Spulenantriebswalze führt.

Wie im Anspruch 6 beschrieben, ist vorteilhafterweise vorgesehen, dass der obere Pneumatikkolben durch ein Federelement beaufschlagt wird, das auf den Pneumatikkolben im Sinne "Rückkehr in die Ausgangsstellung" einwirkt.
Eine solche, an sich bekannte Ausbildung der Ansteuerung eines einfachwirkenden Pneumatikzylinders ermöglicht nicht nur eine kostengünstige, sondern auch eine zuverlässige und langlebige Konstruktion nicht nur des Pneumatikzylinders sondern auch der zugehörigen Ventileinheit.

Die Erfindung wird nachfolgend anhand eines in den Zeichnungen dargestellten Ausführungsbeispiels näher erläutert.

Es zeigt:
- Fig. 1: schematisch in Seitenansicht eine Arbeitsstelle einer Kreuzspulen herstellenden Textilmaschine mit einem Spulenrahmen, der mit einem erfindungsgemäßen Reibungsdämpfer ausgestattet ist,
- Fig.2: eine Schnittdarstellung eines Reibungsdämpfers gemäß Stand der Technik
- Fig. 3: eine Schnittdarstellung eines erfindungsgemäßen Reibungsdämpfers

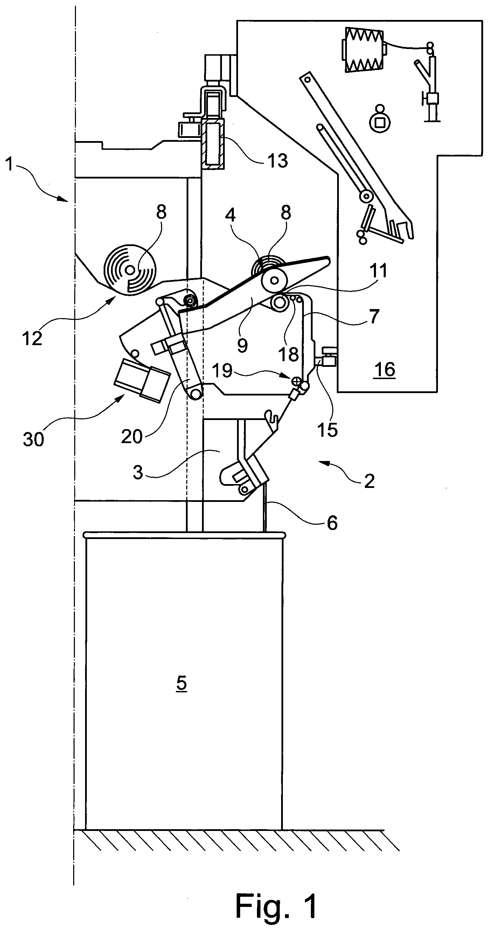

In Figur 1 ist schematisch in Seitenansicht eine Arbeitsstelle einer Kreuzspulen herstellenden Textilmaschine, im Ausführungsbeispiel einer Offenend-Rotorspinnmaschine, dargestellt, die insgesamt mit der Bezugszahl 1 gekennzeichnet ist. Derartige Offenend-Rotorspinnmaschinen weisen, wie bekannt, eine Vielzahl gleichartiger Arbeitsstellen 2 auf, die in Maschinenlängsrichtung nebeneinander angeordnet sind und jeweils über eine Offenend-Spinnvorrichtung 3 sowie über eine Spulvorrichtung 4 verfügen.
Wie bekannt, wird in der Offenend-Spinnvorrichtung 3 ein in einer Spinnkanne 5 vorgelegtes Faserband 6 zu einem Faden 7 gesponnen, der anschließend auf der Spulvorrichtung 4 zu einer Kreuzspule 8 aufgewickelt wird.

Die Spulvorrichtung 4 ist mit einem schwenkbar gelagerten Spulenrahmen 9 ausgestattet, der durch eine Be- und Entlastungsvorrichtung 30 beaufschlagt wird und an den ein erfindungsgemäßer Reibungsdämpfer 20 angeschlossen ist.
Zwischen den Spulenrahmenarmen des schwenkbar gelagerten Spulenrahmens 9 ist eine Leerhülse beziehungsweise eine Kreuzspule 8 frei drehbar gehaltert, die während des Spulbetriebes beispielsweise mittels einer Spulenantriebswalze 11 reibschlüssig angetrieben wird.

Derartige Arbeitsstellen 2 verfügen des Weiteren über eine etwas oberhalb der Offenend-Spinnvorrichtung 3 angeordnete Fadenabziehvorrichtung 19 sowie eine im Bereich der Spulvorrichtung 4 positionierte Fadenchangiereinrichtung 18.

Außerdem weisen solche Offenend-Rotorspinnmaschinen 1 in der Regel eine zwischen den Arbeitsstellen 2 angeordnete, maschinenlange Spulentransporteinrichtung 12 zum Entsorgen fertiggestellter Kreuzspulen 8 auf.

An beziehungsweise auf den Offenend-Rotorspinnmaschinen 1 ist des Weiteren oft, an einer Führungsschiene 13 sowie einer Stützschiene 15 abgestützt, ein verfahrbares Serviceaggregat 16 angeordnet. Derartige Serviceaggregate 16 patrouillieren zum Beispiel während des Spulbetriebes entlang der Offenend-Rotorspinnmaschine 1 und greifen selbsttätig ein, wenn an einer der Arbeitsstellen 2 ein Handlungsbedarf entsteht. Ein solcher Handlungsbedarf liegt beispielsweise vor, wenn an einer der Arbeitsstellen 2 eine volle Kreuzspule 8 gegen eine neue Leerhülse getauscht und anschließend wieder neu angesponnen werden muss. Das Serviceaggregat 16 verfügt zu diesem Zweck, wie bekannt, über zahlreiche Handhabungseinrichtungen, die einen ordnungsgemäßen Kreuzspulen-/Leerhülsenwechsel ermöglichen.

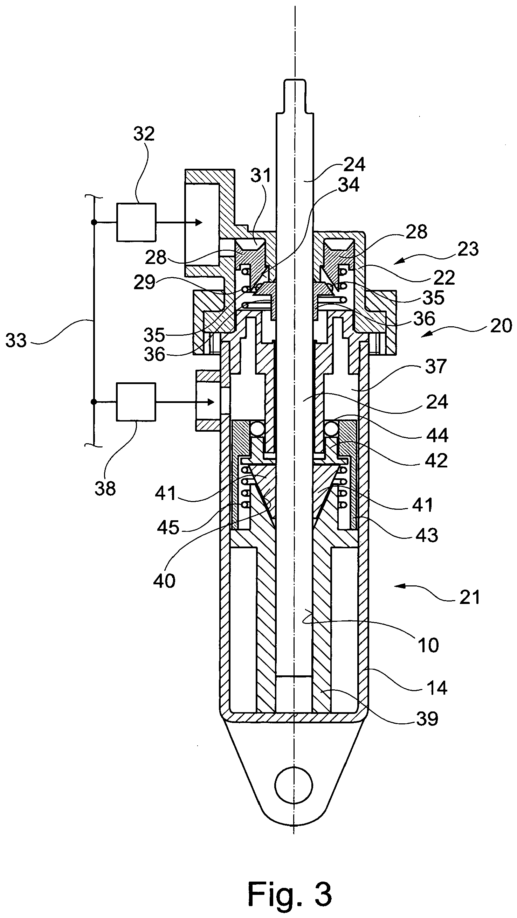

Wie in Fig. 1 weiter dargestellt und vorstehend bereits kurz erwähnt, sind die Spulvorrichtungen 4 der Arbeitsstellen 2 jeweils unter anderem mit einer Schwingungsdämpfungseinrichtung in Form eines erfindungsgemäßen Reibungsdämpfers 20 ausgestattet.
Ein solcher erfindungsgemäßer Reibungsdämpfer 20 ist in Fig. 3 schematisch im Schnitt dargestellt.

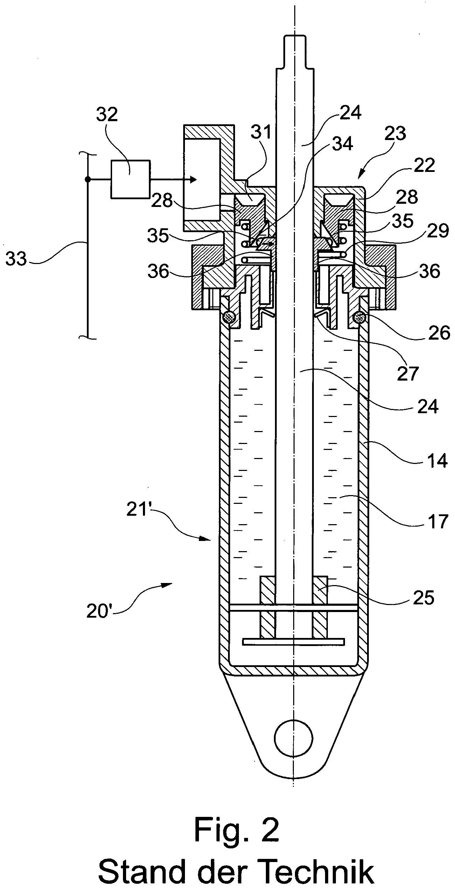

Die Fig. 2 zeigt in einer vergleichbaren Schnittdarstellung einen Öldämpfer 20', wie er durch den Stand der Technik bekannt ist.

Wie in Fig. 2 dargestellt, verfügen die bekannten Öldämpfer 20' über eine Dämpfungseinrichtung 21' sowie über eine, in der Regel im Zylinderoberteil 22 installierte Spulenrahmenhebeeinrichtung 23.
Die Dämpfungseinrichtung 21' weist ein Zylinderunterteil 14, das mit einem Dämpfungsmedium, vorzugsweise einem Dämpfungsöl 17 gefüllt ist, und einen im Zylinderunterteil 14 axial verschiebbar gelagerten, mit einer Kolbenstange 24 ausgestatteten Kolben 25 auf.
Wie bei solchen Hydraulikdämpfern üblich, ist der Kolben 25 entweder mit Durchtrittsöffnungen für das Dämpfungsmedium ausgestattet oder der Kolben 25 ist so dimensioniert, dass bei axialen Bewegungen des Kolbens 25 das Druckmedium verzögert zwischen der Kolbenaußenkontur und der Innenwandung des Zylinderunterteils 14 hindurchströmen kann, was zu einer deutlichen Dämpfung von durch zum Beispiel Spulenrahmenschwingungen initiierten Axialbewegungen des Kolbens 25 und damit auch der Kolbenstange 24 führt.

Bezüglich des Zylinderoberteils 22 ist das Zylinderunterteil 14 durch einen Dichtungsring 26 sowie eine Kolbenstangendichtung 27 abgedichtet.
Wie vorstehend bereits angedeutet, bildet der Dichtungsring 26 eine Schwachstelle derartiger Öldämpfer 20', da der Dichtungsring 26 insbesondere im Zusammenhang mit Montagearbeiten an den Öldämpfern 20' oft beschädigt oder unvorschriftsmäßig eingebaut wird.

Die im Zylinderoberteil 22 angeordnete Spulenrahmenhebeeinrichtung 23 verfügt über einen als Druckring ausgebildeten, einfachwirkenden oberen Pneumatikkolben 28, der durch ein Federelement 29 in seiner Ausgangsstellung positioniert bzw. im drucklosen Zustand in seine Ausgangsstellung zurückgeschoben wird.
Oberhalb des oberen Pneumatikkolbens 28 ist eine Druckkammer 31 angeordnet, die über eine Ventileinrichtung 32 an das Druckluftsystem 33 der Textilmaschine 1 angeschlossen ist.
Im Bedarfsfall kann der obere Pneumatikkolben 28 durch eine entsprechende Ansteuerung der Ventileinrichtung 32 druckbeaufschlagt und axial verschoben werden. Wie in Fig. 2 weiter dargestellt, ist der obere Pneumatikkolben 28 auf seiner der Druckkammer 31 gegenüberliegenden Seite mit einer konisch ausgebildeten Anlagefläche 34 ausgestattet, die bei Betätigung des oberen Pneumatikkolbens 28 mit Kugelelementen 35 eines bezüglich der Kolbenstange 24 axial verschiebbar gelagerten Klemmgliedes 36 korrespondiert. Das bedeutet, bei einer Druckbeaufschlagung der Druckkammer 31 wird der obere Pneumatikkolben 28 axial verschoben und drückt dabei die Kugelelemente 35 des Klemmgliedes 36 so gegen die Kolbenstange 24, dass zwischen dem Pneumatikkolben 28 und der Kolbenstange 24 ein fester Kraftschluss entsteht. Der weiter nach unten gleitende obere Pneumatikkolben 28 nimmt dadurch die Kolbenstange 24 mit, was zu einem Anheben des Spulenrahmens 9 und damit zu einem Abheben der Kreuzspule 8 von ihrer zugehörigen Spulenantriebswalze 11 führt.

Der in Fig. 3 dargestellte, erfindungsgemäße Reibungsdämpfer 20 ist bezüglich des vorstehend beschriebenen Öldämpfers 20' lediglich hinsichtlich seiner Dämpfungseinrichtung 21 modifiziert. Das heißt, die in Fig. 3 dargestellte, im Zylinderoberteil 22 des Reibungsdämpfers 20 angeordnete Spulenrahmenhebeeinrichtung 23 entspricht im Wesentlichen der vorstehend bereits im Zusammenhang mit einem Öldämpfer 20' (Fig. 2) beschriebenen Spulenrahmenhebeeinrichtung 23. Der Reibungsdämpfer 20 unterscheidet sich allerdings bezüglich seiner im Zylinderunterteil 14 angeordneten Dämpfungseinrichtung 21 deutlich von dem in Fig. 2 dargestellten, bekannten Öldämpfer 20'.

Wie in Fig. 3 dargestellt, weist der erfindungsgemäße Reibungsdämpfer 20 im oberen Bereich des Zylinderunterteils 14 einen Druckraum 37 auf, der über eine Ventileinrichtung 38 an das Druckluftsystem 33 der Textilmaschine 1 angeschlossen ist.
Im unteren Bereich des Zylinderunterteils 14 des Reibungsdämpfers 20 ist eine Abstützund Führungseinrichtung 39 angeordnet, in deren zentralen Durchgangsöffnung 10 die Kolbenstange 24 des Reibungsdämpfers 20 gleitend geführt ist. An ihrem oberen Ende verfügt die Abstütz- und Führungseinrichtung 39 außerdem über eine konisch ausgebildete Führungsfläche 40, die mit axial und radial verschiebbar gelagerten Reibungselementen 41 korrespondiert.
Die Reibungselemente 41 sind beispielsweise als im Querschnitt konisch ausgebildete, mit ihren Außenseiten an die Führungsfläche 40 angepasste Halbschalen ausgebildet, die mit ihren Innenseiten so an der Kolbenstange 24 anliegen, dass zwischen den Reibungselementen 41 und der Kolbenstange 24 ein Reibungsmoment entsteht. Die Intensität dieses Reibungsmoments, das für das Dämpfungsvermögen des erfindungsgemäßen Reibungsdämpfers 20 maßgebend ist, hängt dabei davon ab, wie stark die Reibungselemente 41 an die Kolbenstange 24 angedrückt werden.
Die Stärke dieser Andruckkraft lässt sich mittels eines als Druckring ausgebildeten unteren Pneumatikkolbens 42 einstellen, der zwischen einer Führungseinrichtung 43 und einem Führungs- und Abdichtelement 44 geführt, mit dem Druckraum 37 in Verbindung steht und mit seiner Unterseite auf den Reibungselementen 41 aufliegt.
Der einfachwirkende Pneumatikkolben 42 wird vorzugsweise außerdem durch ein Federelement 45 in Richtung seiner Ausgangsstellung beaufschlagt.

Zum Einstellen eines definierten Reibungsmomentes zwischen den Reibelementen 41 und der Kolbenstange 24 des Reibungsdämpfers 20 wird mittels der Ventileinrichtung 38 Überdruck im Druckraum 37 initiiert, was dazu führt, dass der Pneumatikkolben 42 gegen die Kraft des Federelements 45 nach unten gleitet und dabei auch die im Querschnitt konisch ausgebildeten Reibungselemente 41 nach unten schiebt.
Die mit ihren Außenseiten auf einer Führungsfläche 40 der Abstütz- und Führungseinrichtung 39 aufliegenden Reibungselemente 41 werden dabei etwas radial nach innen verlagert und an die Kolbenstange 24 angedrückt. Das dabei entstehende Reibungsmoment sorgt dann während des Spulbetriebes für eine ordnungsgemäße Dämpfung des Spulenrahmens 9 sowie der im Spulenrahmen 9 drehbar gehalterten und von der rotierenden Spulenantriebswalze 11 angetriebenen Kreuzspule 8.

## Patentansprüche

1. Reibungsdämpfer (20) für einen schwenkbar gelagerten Spulenrahmen (9) einer Spulvorrichtung (4) einer Kreuzspulen herstellenden Textilmaschine (1) mit einer an ein Druckluftsystem (33) der Textilmaschine (1) angeschlossenen, pneumatisch arbeitenden Spulenrahmenhebeeinrichtung (23) sowie einer Dämpfungseinrichtung (21) zur Reduzierung von während des Spulbetriebes auftretenden Spulenrahmenschwingungen,
**dadurch gekennzeichnet,**
**dass** die Dämpfungseinrichtung (21) eine pneumatisch betätigbare Einrichtung aufweist, die an das Druckluftsystem (33) der Kreuzspulen herstellende Textilmaschine (1) angeschlossen und so ansteuerbar ist, dass eine Kolbenstange (24) des Reibungsdämpfers (20) mit einem Reibungsmoment beaufschlagt wird,
**dass** die Dämpfungseinrichtung (21) über ein Reibungselement (41) verfügt, das verschiebbar gelagert ist und bei entsprechender Druckbeaufschlagung ein Reibungsmoment auf die Kolbenstange (24) ausübt und
**dass** das Reibungselement (41) zwei Halbschalen aufweist, die bezüglich der Kolbenstange (24) axial und radial verschiebbar gelagert sind,
wobei die Halbschalen jeweils einen konischen Querschnitt aufweisen und gleitend an einer entsprechend ausgebildeten Führungsfläche (40) einer Abstütz- und Führungseinrichtung (39) des Reibungsdämpfers (20) geführt sind.

2. Reibungsdämpfer (20) nach Anspruch 1, **dadurch gekennzeichnet, dass** zur Positionierung des Reibungselements (41) ein als Druckring ausgebildeter unterer Pneumatikkolben (42) vorgesehen ist, der bei Druckbeaufschlagung die Halbschalen gegen die Kraft eines Federelements (45) verschiebt.

3. Reibungsdämpfer (20) nach Anspruch 2, **dadurch gekennzeichnet, dass** der untere Pneumatikkolben (42) an einen Druckraum (37) angeschlossen ist, der über eine Ventileinrichtung (38) mit dem Druckluftsystem (33) der Kreuzspulen herstellenden Textilmaschine (1) in Verbindung steht.

4. Reibungsdämpfer (20) nach Anspruch 1, **dadurch gekennzeichnet, dass** die Spulenrahmenhebeeinrichtung (23) ein axial verschiebbar gelagertes Klemmglied (36) aufweist, das durch einen oberen Pneumatikkolben (28) aktivierbar ist.

5. Reibungsdämpfer (20) nach Anspruch 4, **dadurch gekennzeichnet, dass** das Klemmglied (36) über Kugelelemente (35) verfügt, die, durch den oberen Pneumatikkolben (28) an die Kolbenstange (24) des Reibungsdämpfers (20) angedrückt, beim weiteren Ausfahren des zweiten Pneumatikkolbens (28) zu einer axialen Verlagerung der Kolbenstange (24) führen.

6. Reibungsdämpfer (20) nach Anspruch 4, **dadurch gekennzeichnet, dass** der obere Pneumatikkolben (28) durch ein Federelement (45) beaufschlagt ist, das im Sinne "Positionieren in der Ausgangsstellung" auf den oberen Pneumatikkolben (28) einwirkt.

## Claims

1. Friction damping device (20) for a pivotably mounted winding frame (9) of a winding device (4) of a textile machine producing cross-wound bobbins (1), with a pneumatically operating winding frame lifting device (23) connected to a compressed air system (33) of the textile machine (1) and a damping device (21) for reducing vibrations of the winding frame which occur during the winding operation,
**characterised in that**
the damping device (21) comprises a pneumatically activated device which is connected to the compressed air system (33) of the textile machine (1) producing cross-wound bobbins and can be controlled so that a piston rod (24) of the friction damping device (20) is pressurised by a friction moment,
the damping device (21) has a friction element (41) which is mounted displaceably and with a suitable amount of pressure loading exerts a friction moment on the piston rod (24) and
the friction element (41) comprises two half shells which are mounted to be axially and radially displaceable relative to the piston rod (24),
wherein the half-shells each have a conical cross-section and are guided in a sliding manner on a suitably designed guiding surface (40) of a support and guiding device (39) of the friction damping device (20).

2. Friction damping device (20) according to claim 1, **characterised in that** for positioning the friction element (41) a lower pneumatic piston (42) designed as a pressure ring is provided, which pneumatic piston displaces the half shells against the force of a spring element (45) during the pressure loading.

3. Friction damping device (20) according to claim 2, **characterised in that** the lower pneumatic piston (42) is connected to a pressure chamber (37), which is connected via a valve device (38) to the compressed air system (33) of the textile machine (1) producing cross-wound bobbins.

4. Friction damping device (20) according to claim 1, **characterised in that** the winding frame lifting device (23) comprises an axially displaceably mounted clamping member (36) which can be activated by an upper pneumatic piston (28).

5. Friction damping device (20) according to claim 4, **characterised in that** the clamping member (36) has ball elements (35) which, pushed by the upper pneumatic piston (28) against the piston rod (24) of the friction damping device (20), on a further extension of the second pneumatic piston (28) cause an axial displacement of the piston rod (24).

6. Friction damping device (20) according to claim 4, **characterised in that** the upper pneumatic piston (28) is pressurised by a spring element (45), which for the purpose of "positioning in the starting position" acts on the upper pneumatic piston (28).

## Revendications

1. Amortisseur à friction (20) pour un porte-bobine (9) monté à pivotement d'un dispositif de bobinage (4) d'une machine textile (1) produisant des bobines croisées, avec un équipement (23) de levage de porte-bobine fonctionnant pneumatiquement, raccordé à un système (33) d'air comprimé de la machine textile (1), et avec un équipement d'amortissement (21) destiné à réduire les vibrations du porte-bobine qui surviennent pendant le bobinage,
**caractérisé en ce que** l'équipement d'amortissement (21) présente un organe à actionnement pneumatique, qui est raccordé au système (33) d'air comprimé de la machine textile (1) produisant des bobines croisées et qui peut être asservi de telle sorte qu'une tige de piston (24) de l'amortisseur à friction (20) est sollicitée par un couple de friction,
**en ce que** l'équipement d'amortissement (21) dispose d'un élément de friction (41) qui est monté à translation et qui, lors d'une sollicitation en pression correspondante, exerce un couple de friction sur la tige de piston (24),
et **en ce que** l'élément de friction (41) présente deux demi-coques, qui sont montées à translation axiale et radiale par rapport à la tige de piston (24),
sachant que les demi-coques présentent respectivement une section conique et sont guidées en glissement sur une surface de guidage (40) de configuration correspondante d'un équipement (39) de soutien et de guidage de l'amortisseur à friction (20).

2. Amortisseur à friction (20) selon la revendication 1, **caractérisé en ce que**, afin de positionner l'élément de friction (41), il est prévu un piston pneumatique inférieur (42) qui est réalisé sous forme d'anneau de pression et qui, lors d'une sollicitation en pression, déplace les demi-coques à l'encontre de la force d'un élément formant ressort (45).

3. Amortisseur à friction (20) selon la revendication 2, **caractérisé en ce que** le piston pneumatique inférieur (42) est raccordé à une chambre de pression (37), qui communique par l'intermédiaire d'un ensemble soupape (38) avec le système (33) d'air comprimé de la machine textile (1) produisant des bobines croisées.

4. Amortisseur à friction (20) selon la revendication 1, **caractérisé en ce que** l'équipement (23) de levage de porte-bobine présente un organe de serrage (36) monté à translation axiale, qui peut être activé par un piston pneumatique supérieur (28).

5. Amortisseur à friction (20) selon la revendication 4, **caractérisé en ce que** l'organe de serrage (36) dispose d'éléments sphériques (35) qui, pressés par le piston pneumatique supérieur (28) contre la tige de piston (24) de l'amortisseur à friction (20), produisent un déplacement axial de la tige de piston (24) tandis que le deuxième piston pneumatique (28) continue à se déployer.

6. Amortisseur à friction (20) selon la revendication 4, **caractérisé en ce que** le piston pneumatique supérieur (28) est sollicité par un élément formant ressort (45), qui agit sur le piston pneumatique supérieur (28) dans le sens du « positionnement dans la position initiale ».
